# EUROPEAN PATENT SPECIFICATION

(11) **EP 4 213 463 B1**
(45) Date of publication and mention of the grant of the patent: **30.04.2025**
(21) Application number: 22151432.6
(22) Date of filing: 13.01.2022
(51) Int. Cl.: H04L 51/18, H04L 51/212, H04L 51/216, H04L 12/18

(54) **COMMUNICATION SUPPORT METHOD AND SYSTEM**
KOMMUNIKATIONSUNTERSTÜTZUNGSVERFAHREN UND -SYSTEM
PROCÉDÉ ET SYSTÈME DE SUPPORT DE COMMUNICATION

(43) Date of publication of application: 19.07.2023
(73) Proprietor: Unify Beteiligungsverwaltung GmbH & Co. KG, 81739 München (DE)
(72) Inventor: Klaghofer, Karl, 81373 Munich (DE); Lederer, Thomas, 82211 Herrsching (DE); Ruetschi, Johannes, Boca Raton, 33486 (US)
(74) Representative: Schaafhausen, Anne

(56) References cited:
- CN-A- 111 652 400
- US-A1- 2014 282 915
- US-A1- 2016 188 799

## Description

The present invention relates to a method for communication support, to a program element for executing the method, to a computer-readable medium and to a communication system.

The digitization continues to expand into all areas of the daily life. The more people use digital infrastructure the more they get used to it. Recently the Covid-19 pandemic has accelerated the demand and adoption for remote meetings also for patient - doctor (practitioner) consultation appointments, aka. "telehealth meetings".

The document US 9,898,659 B2 relates to a system for use in remote medical diagnosis of a biological subject, the system including one or more electronic processing devices that receive image data indicative of at least one image of part of the subject's eye from a client device via a communications network, review subject data indicative of at least one subject attribute, select at least one analysis process using results of the review of the subject data, use the analysis process to quantify at least one feature in the image data and generate an indicator value indicative of the quantified at least one feature, the indicator value being used in the assessment of a condition status of at least one condition.

The document US 2016/0188799 A1 relates to a computerized system configured to deliver healthcare to patients online. The computerized system may comprise computing devices and external devices that facilitate communication and data transfer between a doctor at one location and patient or another doctor at a different location. The computerized system may enable a doctor to share medical knowledge, such as via webinars, conduct medical consultations and/or teach a patient or medical student. The computerized system may be further configured to recommend a doctor to a patient using a recommendation algorithm. The computerized system may also enable secure transfer of electronic health records in a way that is fast and encrypted to meet HIPAA requirements using HL7.

The document US 2014/0282915 A1 relates to a method that can establish a first context for a user to start a process of correlation of information from multiple sources. The method can then authorize the user to access information from one or more sources of information. The method can request the first information from the one or more sources of information based on the first context. Based on the first information received from the one or more sources of information, the method can revise the first context to generate a second context. The method can use the second context to correlate second information from the one or more sources of information. The method can filter the second information for the user to determine a relevant subset of information. Eventually, the method can send the relevant subset of information to a client device associated with the user.

Also, information about people is more and more digitized and available via digital servers. The huge amount of storage capacity, however, also makes it possible to store a lot of information. The history of patients, for example, may be stored in a digital repository in form of EHR (Electronic Health Records) data which make information and details available from past patient visits.

However, doctor's time is expensive and short and thus he/she cannot completely prepare for the meeting by studying all previous EHR records, particularly if the patient has a long health history. This is especially true for doctors having several hundreds of patients or where the patient does not have a fixed doctor relation, e. g. Medical Centers with pools of doctors in large cities. Thus, it may be difficult for a doctor to know or remember all potentially relevant past medical records, which may be relevant in the context of a current remote patient visit reason. Furthermore, over time extensive number of health records per patient are accumulated from many previous patient visits. Many of them are not relevant as they do not contribute to the current visit and/or context. But it is also easy that relevant information may not be detected.

Furthermore, remote consultations may employ video cameras for remote telehealth meetings where it is expected from the doctor to keep eye contact with the patient through the video camera during the conversation. Manually searching for previous health records in a doctor's separate EHR system which may have to be accessed from a different monitor screen during the live telehealth meeting may prevent the doctor from keeping good eye contact with patient.

### Summary of the invention

Therefore, the present invention is based on the object to provide an efficient communication support between two parties. In particular, the present invention relates to a method for communication support, a program element for executing the method, a respective computer-readable medium and a communication system.

The subject-matter of the invention is defined in the independent claims. Further embodiments of the invention are defined in the dependent claims.

According to an aspect of the present invention, a method for communication support in a communication server is provided, where the method comprises routing of at least one communication channel between a first user device and a second user device through a meeting application server, wherein a filter service having access to the at least one communication channel, establishing a filter control channel between at least one of the first user device and the second user device and the filter service and associating the at least one communication channel with the filter control channel. In other words, the control channel is established between the first user device and the filter service and/or between the second user device and the filter service.

Wherein the filter service may comprise of multiple services, such as Real-Time (RT) voice filter, RT text filter, RT aggregator & query filter or other services.

The method further comprises receiving a filter control rule inside the filter control channel and analyzing current information which is exchanged inside the at least one communication channel between the first user device and the second user device.

The method provides for extracting, classifying and/or selecting current context-based information from the current information in accordance with a predefined context selection rule and aggregating the current context-based information extracted from the current information. Thereby, the context selection rule is adapted to extract parts of information out of an information stream and/or out of a media stream. The extracted parts of information are grouped together and are linked by the fact that they belong to a predefined field of information and/or a common class of information.

In an example, the aggregation of the current context-based information extracted from the current information is made by employing a filter and/or a filter module and the aggregation may generate a set of current context-based information extracted from a communication routed between the first and second user device. Such aggregation of current context-based information may form a current record of current context-based information, e. g. a current health record. This aggregation may be temporarily stored in a volatile memory.

The method further comprises filtering the aggregated current context-based information according to the filter control rule and generating filtered information based on the filter control rule.

In one example hereinafter also referred to as use case 1, where an additional repository of history records may be used, the aggregated current context-based information may be combined with the filter control rule. By combining the current context-based information with the filter control rule a list and/or an additional filter rule is composed, wherein the composed filter rule may be used to query a repository of historical and/or past records stored in a database or repository. The repository of history records may comprise a collection of historical records recorded during previous consultations of a user. The historical records may substantially not be grouped based on a specific context. The historical records may be a summary of previous meetings with a user and therefore may be user specific.

In another example hereinafter also referred to as use case 2, the filter control rule provided in the filter control channel is applied to the aggregated current context-based information derived from the at least one communication channel. In this way, no external repository may be used. In an example, the aggregated current context-based information may be assumed as to be an aggregation of current health records. The meaning of the data entered by a doctor or nurse through a filter rule in this use case 2 is of course slightly adopted, compared to use case 1. For example, a parameter like "time period" for use case 1 very clearly determines how many weeks, months, years the Electronic Health Records (EHR) query should look back for past records. For the use case 2, the parameter "time period" is not that relevant, as use case 2 would be only about "current" meeting capturing's (from filters such as Real-Time Voice Filter, etc.). However, one interesting implementation option could be that as soon as the doctor/nurse sets time period to something other than zero (e. g. 1 year), the system automatically also looks into a repository for past records during the past year. Other Filter parameters make equally sense in both use cases 1 and 2 for example criticality.

The method further comprises providing the filtered information to at least one of the filter control channel and the at least on communication channel.

This principle of filtering may reduce the quantity of information a doctor has to review when preparing for a current remote telehealth meeting, in terms of what contextually may be relevant for a patient participating the current visit. In an example, substantially only the relevant health records of previous sessions can be provided, and old records may be filtered according to a specific context. Also, actual and/or current information provided in a real time meeting may be filtered and the quantity of information to be considered may be low.

A doctor using the reduced quantity of information may be able to concentrate on relevant facts and thus may provide a high-quality diagnosis. The reduced information may allow consideration of contextually relevant past and current data, e. g. Electronic Health Records (EHR). The suggested principle may provide for an intelligent, context aware, real-time filtering and a presentation of past and current records.

According to a further aspect of the present invention, the method further comprises displaying the filtered information on a graphical user interface. The graphical user interface may allow a user an easy operation and/or control of parameters that have to be set up. In an example, the method may be integrated into a telehealth video meeting tool and/or application and the graphical user interface may allow the user to keep eye contact with the other party.

According to another aspect of the present invention, the method comprises operating the graphical user interface by at least one operation method selected from the group of operation methods consisting of gesture operation, input device operation, keyboard operation, touch screen operation, mouse operation, pointing device operation. The different ways of interacting offered by the method allows the operator and/or user of an application using such a method to concentrate on the opposite party and, in the example, of a doctor to keep eye contact with the patient during the examination.

According to yet another aspect of the present invention, the method comprises setting and/or changing the context selection rule via the filter control channel. In this way, an operator may change a preset parameter used in the predefined context selection rule and/or in the filter control rule. The setting and/or changing may be controlled by manipulating the filter control rule on the graphical user interface. A partial setting and/or changing of the selection rule and/or filter control rule may be possible.

According to a further aspect of the present invention, the method comprises associating the at least one communication channel with the filter control channel by generating a meeting identifier. The meeting identifier may allow to refer different communication and/or control channels to another and may combine the corresponding content of the relevant channel within a messaging application and/or within a user interface, particularly a graphical user interface, on an application layer of the OSI (Open Systems Interconnection) layer model. In this way a link between communication and/or control channels may be made.

According to a further aspect of the present invention, the method comprises associating the meeting identifier with a user identifier. An association between the meeting identifier, e. g. a telehealth meeting identifier, with a user identifier may allow for linking user data such as a user specific EHR record with a session between the user and another user and transmitting the user data to the corresponding session. In this way, the user data may be added to information exchanged within the at least one communication channel. In an example, it may be possible to overlay an EHR record with a video stream.

According to a further aspect of the present invention, the method comprises associating the at least one communication channel with a repository of history records, e. g. an EHR record, stored for at least one user of the first user device and/or the second user device in the filter service. In this context, aggregating the current context-based information comprises aggregating the current context-based information with the filter control rule to form a query list, wherein filtering the aggregated current context-based information according to the filter control rule comprises querying the repository of history records with the query list. Employing a query list to query a repository may not only filter current context-based information but in addition and/or alternatively also retrieve history records. The query then may be based on current context-based information in combination with the filter control rule and the query result comprises presently provided current information combined with previous information from past records.

In an example, the filter control rule provided in the filter control channel may comprise a mode indicator such as a flag to indicate whether filtering comprises filtering the aggregated current context-based information according to the filter control rule and/or aggregating a query list from the current context-based information and the filter control rule and querying the repository of history records with such a query list.

For querying the repository of history records the repository may provide an interface, e. g. an interface according to the standard HL7-FHIR (Health Level Seven International - Fast Healthcare Interoperability Resources).

According to yet another aspect of the present invention, the method comprises storing a raw data stream.

Storing the traffic and/or data stream exchanged between the user devices may allow for documenting the consultation between users, such as between a doctor and a patient.

According to a further aspect of the present invention, the method comprises deleting current context-based information and/or at least one history record retrieved from a/the repository of history records available in the filter service.

After closing a connection between the user devices any assembled, aggregated and/or queried information may be destroyed to allow for data protection. Some of the retrieved history records and/or current context-based information may be stored in a volatile memory and may be accessed by a later session when not safely removed from the memory.

According to a further aspect of the present invention, the method comprises storing at least a part of the extracted current context-based information and/or provided filtered information in a/the repository of history records.

Particularly when no repository of history records exists and the filtering is substantially only based on current context-based information, which may only be stored in a volatile memory, such information may be stored for later use in a newly generated repository of history records. In this way, it is possible to set up a new repository entry for a patient who consults a doctor for the first time.

According to a further aspect of the present invention, at least one sub-process of the method selected from the group of sub-processes consisting of providing and/or receiving a filter control rule inside the filter channel, extracting current context-based information from the current information, aggregating the current context-based information and filtering the aggregated current context-based information is processed in real-time.

Throughout this text, the term real-time may be understood as being processed continuously. This means that information may substantially processed as soon as it is available. In an example, a real time voice filter or a RT (real-time) Voice Filter may process a spoken voice stream immediately after it is received.

The term "continuously" may mean that a system parameter value of X seconds or milliseconds determines the interval in which an aggregator is re-aggregating its query list. In other words, it means that processing cycles of continuously executed processes immediately restart when finished and the duration for that cycle may substantially only be limited by a processing time of a processor executing the process.

According to yet another aspect of the present invention, analyzing the current information comprises converting the collected current information into a common format, e. g. voice traffic and data traffic may be converted to ASCII (American Standard Code for Information Interchange) text.

In this way, in an example, after applying voice recognition techniques to voice traffic, the original voice traffic may be substantially handled like text traffic and the same algorithms used for text traffic may be used to process a voice input. No additional processing module may be necessary for every new technology and a simple pre-processing module may be used to bring the input into a format that can be used as an input for an existing processing module.

According to another aspect of the present invention, a program element is provided, which when being executed by a processor is adapted to carry out the method for communication support.

According to yet another aspect of the present invention, a computer-readable medium is provided comprising a program code, which when being executed by a processor is adapted to carry out the method for communication support of one of the claims.

A computer-readable medium may be a floppy disk, a hard disk, a USB (Universal Serial Bus) storage device, a RAM (Random Access Memory), a ROM (Read Only Memory) or an EPROM (Erasable Programmable Read Only Memory). A computer readable medium may also be a data communication network, e. g. the Internet, which may allow downloading a program code.

The method may be implemented as a microservice running on a server.

According to a further aspect of the present invention, a communication system comprising a communication server, a first user device, a second user device is provided.

The communication server comprises a meeting application server, wherein the meeting application server is adapted to route at least one communication channel between the first user device and the second user device and wherein a filter service is adapted to have access to the at least one media channel and to establish a filter control channel between at least one of the first user device and the second user device and the filter service.

The filter service is further adapted for associating the at least one communication channel with the filter control channel and for receiving a filter control rule inside the filter control channel.

The filter service is further adapted for analyzing current information, which is exchanged inside the at least one communication channel between the first user device and the second user device and for extracting current context-based information from the current information according to a predefined context selection rule and for aggregating the current context-based information extracted from the current information.

The filter service is further adapted for filtering the aggregated current context-based information according to the filter control rule and for generating filtered information based on the filter control rule for providing the filtered information to at least one of the filter control channel and the at least one communication channel.

It has also to be noted that aspects of the invention have been described with reference to different subject-matters. In particular, some aspects have been described with reference to apparatus type claims, whereas other aspects have been described with reference to method type claims. However, a person skilled in the art will gather from the above and the following description that, unless other notified, in addition to any combination between features belonging to one type of subject-matter also any combination between features relating to different types of subject-matters is considered to be disclosed with this text. In particular, combinations between features relating to the apparatus type claims and features relating to the method type claims are considered to be disclosed.

The invention and embodiments thereof will be described below in further detail in connection with the drawings.
- Fig. 1: shows a schematic block diagram of a communication system according to an exemplary embodiment of the present invention.
- Fig. 2: shows a schematic block diagram of a filter service according to an exemplary embodiment of the present invention.
- Fig. 3: shows different stages of an information flow chart according to an exemplary embodiment of the present invention.
- Fig. 4: shows a flow chart for a method for communication support according to an exemplary embodiment of the present invention.
- Fig. 5: shows a system architecture of a real-time system for patient records filtering and presentation in telehealth meetings according to an exemplary embodiment of the present invention.
- Fig. 6: shows a structural information flow diagram for a real-time system for patient records filtering according to an exemplary embodiment of the present invention.

### Detailed Description

The illustration in the drawings is schematic and may be not to scale. In different drawings, similar or identical elements are provided with the same reference numerals.

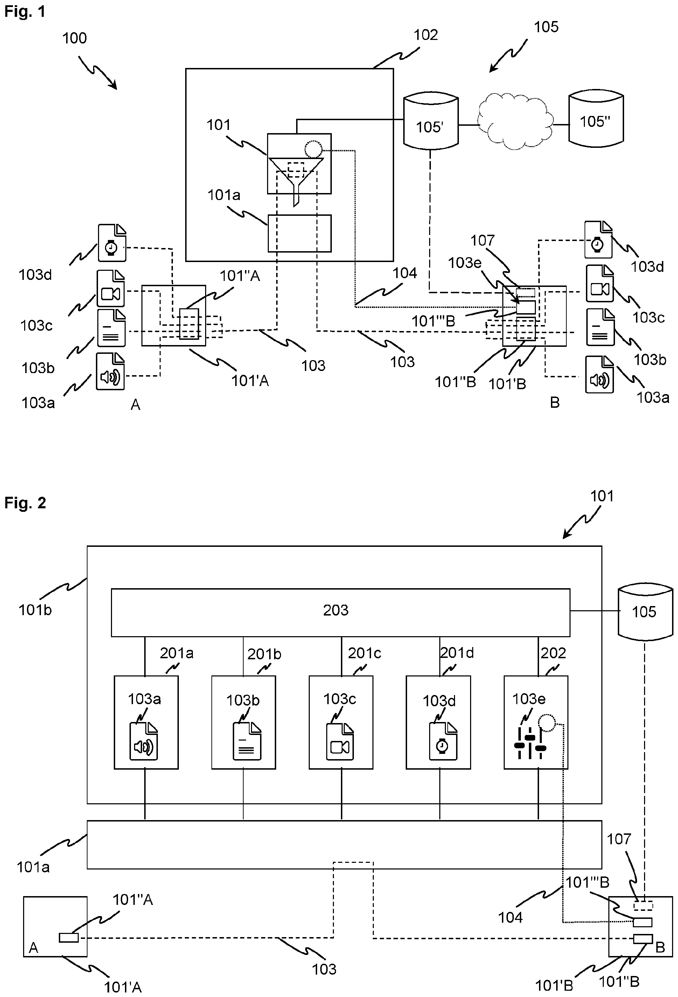

Fig. 1 shows a schematic block diagram of a communication system 100 according to an exemplary embodiment of the present invention. The communication system 100 comprises a communication server 102, a first user device 101'A or a user device A and a second user device 101'B or a user device B.

The communication server 102 comprises a meeting application server 101a, wherein the meeting application server 101a is adapted to route at least one communication channel 103 between the first user device and the second user device and wherein a filter service 101 is adapted to have access to the at least one media channel 103 and to establish a filter control channel 104 between at least one of the first user device 101'A and the second user device 101'B and the filter service 101. The meeting application server 101a may comprise a media server (not shown) through which routing of the at least one media channel 103 between the user devices 101'A, 101'B is achieved.

The filter service 101 is further adapted for associating the at least one communication channel 103 with the filter control channel and for receiving a filter control rule 103e inside the filter control channel. The at least one communication channel 103 may carry voice traffic 103a, text traffic 103b, e. g. from a messenger application, video traffic 103c, and/or data traffic 103d, e. g. IoT (Internet of Things) data traffic from a wearable device. A user device 101'A and 101'B may be used by a respective user, e. g. a patient at user device 101'A and a doctor at user device 101'B. The users are not shown in Fig. 1, however, in the context of this description the term "user device" is used equally to the term "user" operating the user device 101'A, 101'B. In an example, users of the user devices 101'A, 101'B may be a patient, a nurse or a doctor.

The filter service 101 is adapted for analyzing current information, which is exchanged inside the at least one communication channel 103 between the first user device 101'A and the second user device 101'B. For each type of traffic, a specific communication channel exists. Thus, for voice traffic 103a, text traffic 103b, video traffic 103c and data traffic 103d a separate channel of the at least one communication channel 103 exists. Such a channel may be a virtual connection within one single physical connection.

The filter service 101 may monitor current payload information carried in each of the at least one communication channels 103 and extracts current context-based information from the current information according to a predefined context selection rule and for aggregating the current context-based information extracted from the current information.

In order to filter the aggregated current context-based information the filter service 101 uses the filter control rule 103e and generates filtered information based on the filter control rule 103e. The filter service 101 provides the filtered information to the filter control channel 104 and/or to the at least on communication channel 103.

The first user device 101'A runs a first RTC (Real-Time Communication) application 101"A, e. g. a meeting application, where traffic from an input device, e. g. a microphone, a keyboard, an IoT device, a video camera is converted into a stream that is adapted to be transferred over an appropriate communication channel 103. Also, a stream that is received may be provided via the RTC application 101"A on an output device, e. g. voice data over a speaker or video data on a display. The input devices and output devices are not shown in Fig. 1.

Corresponding input and output devices are used on the second user device 101'B as well as a corresponding second RTC application 101"B, e. g. a RTC meeting application.

In addition, the second user device 101'B has a user interface 101"'B, e. g. a graphical user interface, which allows for controlling the content of the filter control channel 104. As shown in Fig. 1 the filter control channel 104 is established between the second user 101'B device and the filter service 101 and is terminated on the filter service 101.

In an example, the user interface 101‴B and the RTC meeting application 101"B may be operated in an overlay mode.

The filter service 101 is connected to a repository 105 which may be separated into a local repository 105' and a cloud-based repository 105". The repository 105 may be a database and may store EHR records.

The repository 105 can be accessed via an interface, e. g. a HL7-FHIR and/or a corresponding API (Application Programming Interface).

The repository 105 can also be accessed via a proprietary repository client 107, e. g. a EHR client 107. However, in that case an integration into the second meeting application 101"B and/or in the user interface 101‴B is not provided.

Fig. 2 shows a schematic block diagram of a filter service 101 according to an exemplary embodiment of the present invention.

As shown, the filter service 101 comprises two separate functional blocks. The meeting application server 101a is adapted to route the at least one communication channel 103 as well as the filter control channel 104.

The filter unit 101b comprises different filter modules 201a, 201b, 201c, 201d, 202 which corresponds to the traffic 103a, 103b, 103c, 103d, 103e transported in the at least one communication channel 103.

The different filter modules 201a, 201b, 201c, 201d, 202 are linked to the filter aggregator and query module 203.

Without the intention to limit the scope of the invention and the general use of the invention in several fields, the exemplary embodiments in the following and above may focus on a scenario of a telehealth meeting where user A is a patient and user B is a doctor who examines the patient.

In this example, the communication system 100 is realized as a real-time (RT) communication system, adapted for telehealth meetings. In this system 100, contextually filtering of past and/or current patient records in real-time is used during the live remote telehealth meeting between doctor B and patient A.

This contextual filtering is automatically achieved by leveraging an aggregation of different filter modules 201a, 201b, 201c, 201d, 202. The filter modules 201a, 201b, 201c, 201d are adapted for analyzing current information which is exchanged inside the at least one communication channel 103 between the first user device 101'A and the second user device 101'B. They are further adapted for extracting, classifying and/or selecting current context-based information from the current information according to a predefined context selection rule.

The RT filter API module 202 is adapted to provide and/or setup a filter control rule.

In particular, the real-time (RT) voice analytics module 201a or RT voice filter module 201a is a filter module 201a which is adapted to detect keywords and intents detected from doctor - patient voice conversation 103a using ASR (Automatic Speech Recognition) and Transcription (Speech to Text), Text Analytics and/or Natural Language Processing (NLP). In the sense of the invention an intent is that what a user wants to achieve. The term "intent" is a commonly used term in ML (Machine Learning) techniques, such as NLP (Natural Language Processing). The detection of an intent is called intent recognition - sometimes called intent classification - this is the task of taking a written or spoken input, and classifying it based on what the user wants to achieve. Intent recognition forms an essential component of chatbots and finds use in sales conversions, customer support, and many other areas. As mentioned, intent recognition is a form of natural language processing (NLP), a subfield of artificial intelligence.

The Real-time (RT) voice filter module 201a may be implemented as a compound function that makes use of other functions to analyze the spoken conversation in real-time, in order to detect relevant terms, e. g. medical terms. The detected relevant terms from the RT voice filter 201a are being sent to the RT filter aggregator and query function 203 or filter aggregator and query module 203.

For this purpose, the RTC meeting application server function 101a or meeting application server 101a, e. g. a conference server and/or a media server, sends the voice streams received in a communication channel 103 to the RT voice filter function 201a. For voice analytics in general any Speech to Text (S2T) transcribing may be applied, i. e. converting the spoken voice to text. Different cloud-based or on-premises based transcribing software (SW) frameworks may be used for transcribing voice to text.

Based on the transcribed text, a text analytics function analyzes the text by looking for current context-based information in the current or ongoing patient - doctor communication, e. g. medical terms such as sickness terms, symptom terms, e. g. left ear pressure, body part terms, e. g. left ear or tongue, or attributes such as time and/or date attributes, e. g. information from last week. Implementation options may comprise keyword detection techniques but also context detection which combine terms such as left ear pressure, last week. The latter may be made by leveraging NLP techniques, i. e. detecting an intent.

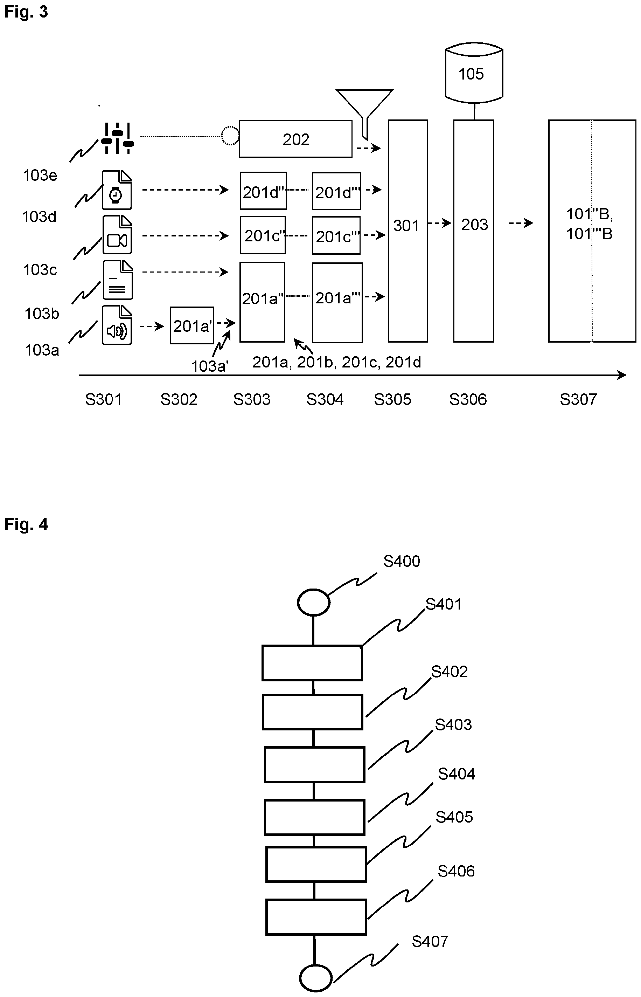

Also, simple rule-based technologies may be used and consequently the RT voice filter 201a may comprise different other subcomponents and the composition of components forms a compound service RT voice filter 201a. The subcomponents will be described in more detail in Fig. 3.

The components may be selected from the group of components consisting of ASR, S2T, Text Analytics and NLP. Any of these subcomponents may be implemented either as a local SW framework or a Cloud service.

The RT voice filter 201a is continuously processing the provided information, i. e. it processes the spoken voice streams in real-time as received from the RTC meeting application server 101a during the telehealth meeting and sends further detected and relevant terms or intents to the RT filter aggregator and query function 203. The RT filter aggregator and query function 203 may further use an aggregator 301 (not shown in Fig. 2).

Another module that is focused to text analysis is the RT text analytics module 201b. This text sensitive module may be used in case of IM (Instant Messaging) and/or chat input. Such purely text-oriented communication may be used by patients with speaking disabilities and allows for accessibility for such patients. The analysis principles are substantially the same as for the RT voice analytics module 201a from the stage after the voice traffic is transcribed to text.

The RT text analytics module 201b or RT text filter module 201b implements a filter function which may substantially not require the voice/speech support function that is employed in the RT voice filter module. Text conversation data such as real-time chat is used for example for telehealth meetings with patient's with deaf-mute disabilities. The RT text analytics module 201b analyzes the text-based media stream of the at least one communication channel 103 for relevant terms or intents, e. g. from the medical field.

For text analysis the corresponding text analysis function of the voice conversation function may be used as soon as the speech has been transcribed to text. Also, in case of a RT text filter 201b, it is the RTC meeting application server 101a which passes on or forwards the text contents to the RT text filter module 201b. In the RT text filter 201b, text analytics of raw text takes place, also using techniques such as keyword detection or NLP. Identified keywords or intents are continuously sent to the RT filter aggregator function 203. Services and components for the RT text filter 201b may be implemented as local on-premise services or as cloud functions.

The RT video analytics module 201c is adapted to analyze a video stream provided in the at least one communication channel 103. In an example, body parts of a patient and/or anomalies are detected through video camera feeds 103c.

The RT video analytics module 201c or RT video filter 201c is responsible for detecting body parts or body part anomalies through the video feed 103c, based on the patient's video stream received from the RTC meeting application server 101a. For example, when a patient shows his/her tongue into the video feed 103c of his/her video camera, the body part "tongue" is detected and sent further to the aggregator function 301, 203. Any anomaly or symptom of the body part, e. g. "coated tongue", that is detected by the RT Video Filter module 201c is forwarded to the aggregator function 301, 203.

For making the analysis of the video stream, the RT video filter function 201c uses in the background image and video analytics techniques and SW frameworks that implement image and/or video analytics and compare the received video stream against trained video and/or image data sets. From a deployment perspective, such video and/or image analytics can be performed on-premise or in the cloud.

In an example, the RT video filter function 201c may use machine learning techniques in order to provide the trained video and/or image data sets. However, it is to be noted that machine learning may not be necessary to extract the context relevant information from the media streams.

The RT loT analytics module 201d may be able to analyze ergonomic data that is provided in a loT data stream over at least one communication channel 103. In this way patient's wearable devices (loT) monitoring data may be inserted into the RTC system 100, e. g. current blood pressure value of the patient.

RT loT analytics module 201d or the RT loT data filter 201d may offer the use of a new data source as patients start using wearables, e. g. things and/or devices, such as smart watches, smart wristbands, implanted sensors, etc., that monitor patient's condition, i. e. IoT monitoring. For example, implantable sensors such as blood sugar measurement devices may deliver loT data. Wearables may leverage Bluetooth or other near field communication techniques in order to feed the data into the meeting application 101"A, 101"B. The monitored and measured loT data 103d are being fed into an loT data channel of the RTC system 100 and are being captured and forwarded substantially in real-time from the RTC meeting application server 101a to the RT loT data filter function 201c.

The RT loT data filter 201d analyzes the received real-time raw data, may make further analyses of the already pre-analyzed data as received from the wearables and forward relevant data, i. e current context-based information, to the aggregator function 301, 203. Relevant data may include current blood pressure data, current blood sugar data, etc. Blood pressure data may be particularly relevant when they are too high, or too low.

In analogy to above mentioned RT filter functions 201a, 201b, 201c, also the RT loT data filter function 201d or the RT loT data filter service 201d may either be deployed on-premise or in the cloud.

The RT filter API module 202 is connected to the user interface 101‴B. The user interface 101‴B may be a part of the meeting application 101"A, 101"B. The RT filter API module 202 is a module which is adapted for processing filter data, e. g. filter control rule 103e.

For accessing the RT filter API module 202, an API is provided that may interact with the user interface 101‴B, with the meeting application 101"A on the first user device and/or with the meeting application 101"B on the second user device. The RT filter API module 202 provides an additional control filter that may be set and/or changed on the second user device 101'B which is used by the doctor. In particular, the doctor may provide input for setting the RT filter API module 202 through the telehealth meeting application GUI (Graphical User Interface) 101‴B during any live meeting with the first user, e. g. a patient. The user of the second user device 101'B may use the user interface 101‴B for controlling and/or filtering aggregated current context-based information by providing a filter control rule 103e. The filter control rule may set filter criteria such as a relevant time period, correlation, risk factor, criticality, monitoring follow-up.

More specifically, the RT filter API module 202 or the RT filter API 202 is an additional filter which is controllable and/or settable by a user, e. g. a doctor or a nurse. This RT filter API 202 may be remotely controlled via the RTC meeting application client B 101‴B of the second user device 101'B or by user device B. The RT filter API 202 is used to set further general filter criteria which is being received by the RT filter API function 202 and sent further to the aggregator function 301, 203. Such general filter criteria may include but are not limited to a time period, a correlation, a risk factor, a criticality and a monitoring follow-up status.

Setting the time period defines the period the doctor wants the system to search for patient's past and contextual relevant EHR records. Examples for time period values are 1 day, 1 week, 1 month, 1 year, last 3 years, last 5 years, etc. This function may help to reduce the number of provided filter and/or query results and may avoid eventual information overload. In an example, an information overload may be generated if an old patient, e. g. 80 years old, with hundreds or thousands of past EHR records stored in the repository consults the doctor. A filter control rule 103e may avoid that too many previous EHR records are being found and presented to the doctor's GUI and need to be assessed, even if contextual filtering with a predefined context selection rule is applied.

Setting a correlation allows a doctor to consider causally related issues of a disease. Although a patient may only report about ear issues such as having pressure in the left ear, the doctor may set a correlation filter to a "neck-nose-ear" correlation parameter because ear issues often show a correlation with the overall medical field of neck-nose-ear.

A risk factor may be set in the RT filter API module 202 by the doctor or nurse for a specific patient in order to examine certain indications that may have impact on the diagnosis. In an example, a risk factor may be based on age, pre-existing medical conditions, habits like smoking and/or a BMI (body mass index) etc.

A criticality parameter may define a factor for the intensity and/or depth of a query: E. g. a criticality parameter may be a level set based on current overall perception the doctor has from the patient. A higher level may lead to a higher quality search, i. e. a longer search with more processing power being spent for the search process.

A monitoring follow-up parameter may define the time period between two meetings. The longer the period between two meetings or the longer the follow-up time, the more precise the search may need to be. Or, if the doctor has not seen this patient for 3 years, the search quality and/or a granularity level for finding relevant past records needs to be higher.

An RTC meeting application data channel 104 or a filter control channel 104 may be realized with an WebRTC data channel, in cases where the RTC system 100 is WebRTC based. The filter control channel 104 is used for transporting settings from the doctor's RTC meeting application client B 101"B and/or the user interface 101‴B to the RTC meeting application server service 101a. Further, other transport options are possible.

Filter criteria and their values are inputted by the doctor or nurse in real-time or pre-set with default criteria and/or default values. Pre-set criteria and/or default values may be used per system, per patient groups, e. g. dependent on patient's risk factor group, or on a per patient basis. Any such default filter setting may be overwritten based on live real-time inputs received through the RT filter API module 202 by the doctor or nurse. As an implementation option, also inputs from other filters, e. g. through voice analytics, may overwrite or override default settings. For setting filter parameters, at least one operation method may be used selected from the group of operation methods consisting of gesture operation, input device operation, keyboard operation, touch screen operation, mouse operation, pointing device operation and voice control operation.

Figs. 1 and 2 show the system 100 for patient records filtering and presentation in telehealth meetings as a system architecture. The building blocks illustrate the overall system 100 together with the main functional building blocks as well as the main interfaces. It is to be noted that either all or only parts of the shown RT filters 201a, 201b, 201c, 201d, 202 are implemented or used in a given solution dependent on the relevant requirements and on the used communication channels 103.

Fig. 3 shows different stages of an information flow chart according to an exemplary embodiment of the present invention. The flow chart describes an information flow through components of the filter service 101. Example values of data detected and used by the filer modules 201a, 201b, 201c, 201d, 202 are described in order to provide an example filtering of patient records and result presentation in telehealth meetings, e. g. example keywords detected, example body parts or anomaly detected in a video stream, example loT monitoring data received and/or example filter data inputted by the doctor.

As part of a consultation workflow, the control filter 202 or RT filter API module 202 may be predefined with default filter values or default filter parameter. In another example, the control filter 202 may be at least partially set during the "nurse intake" phase, for example, by manually entering data into the system 100.

The telehealth meeting system 100 may use for the at least one communication channel any suitable technology or standard for real-time communication, such as SIP (Session Initiation Protocol), WebRTC, other RTC standards or proprietary solutions.

In cases, where the central telehealth meeting application server 101a routes the at least one media channel 103 centrally, the routing of the at least one communication channel 103 between a first user device 101'A and a second user device 101'B, wherein a filter service 101 having access to the at least one media channel 103 and may use the central RTC meeting application server 101a or the central RTC meeting application server function 101a for extracting and/or analyzing current information which is exchanged inside the at least one communication channel 103 between the first user device 101'A and the second user device 101'B.

In other cases, where the central telehealth meeting application server function 101a may instead of routing the media channels 103 centrally, e. g. via its central media server, routes the media channels 103 directly between the meeting participants 101'A, 101'B, e. g. patient and doctor, the functions of the RTC meeting application server 101a that are used for media handling and for interfacing to RT filters 201a, 201b, 201c, 201d, 202 and RT filter aggregator and query function 301, 203 are handled by a de-central media handling function (not shown in Figs. 1 - 3). A de-central media handling function may be an SBC (Session Border Controller), a de-central media server or even the doctor's telehealth meeting application client B 101"B, which may be adapted to handle media channels 103. Further, the invention offers implementation options for the communication channels (media streams) being routed directly between the endpoints (i.e. without being routed through a central media server). This may be used if end-to-end encryption of the media streams is required when the central Media Server does not support for this. Or if no central Media Server is available/used at all. In this decentralized routing case, the filter service 101 needs to access the media streams (communication channels) for analytics at the endpoint side, typically at the doctor's endpoint. With regard to the physical location of the filter service 101, a broad range of different deployment options are possible. Besides deployment at a central server, deployment of the filter service 101 at the doctor's endpoint is possible. Further, deployment of the filter service 101 as a separate endpoint is also a possible architecture.

Coming back to the case of employing a central RTC meeting application server 101a function as shown in Figs. 1 - 3 for routing the at least one media channel 103. The central RTC meeting application server function 101a feeds the received media channel data 103a, 103b, 103c, 103d, 103e, e. g. voice 103a, text 103b, video 103c, loT data 103d and also input filter data 103e and/or a filter control rule 103e, to a set of data analytics functions 201a, 201b, 201c, 201d, 202, i. e. RT filters 201a, 201b, 201c, 201d, 202. The received media channel data 103a, 103b, 103c, 103d, 103e may originate from the doctor or nurse, from the patient and/or the doctor.

The set of RT filters 201a, 201b, 201c, 201d, 202 analyses the received data and compares the received and extracted data with trained data sets. This analysis may be made on a local software framework on the communication server 102, e. g. a framework for ASR, a framework for transcribing or a framework of NLP, etc. As an alternative or in addition this analysis and/or extraction of the received data may be made via cloud software frameworks.

The output of each RT filter 201a, 201b, 201c, 201d, 202 is aggregated in the RT filter aggregation and query function 203, where a query to an EHR system 105 takes place to fetch contextually relevant previous data from the EHR system 105.

There may exist at least two options how queries to the EHR system 105 are made.

If no record for a specific patient exists in the EHR system 105 and/or if the doctor substantially only wants to analyze actual information or current information of the patient in a first mode of operation, it is provided that the extracted information is aggregated inside a RTC filter aggregator 301 or the RTC filter aggregator module 301, after current context-based information from the current information has been extracted according to a predefined context selection rule inside the RT filters 201a, 201b, 201c, 201d, 202.

In other words, the RTC filter aggregation module 301 is adapted for aggregating the current context-based information extracted from the current information 103a, 103b, 103c, 103d, 103e and provided at the output of RT filters 201a, 201b, 201c, 201d, 202. The filter control rule 103e is then used for filtering the aggregated current context-based information. Filtered information based on the filter control rule 103e is generated in the RTC filter aggregator module 301 and/or the filter aggregator and query module 203. The RTC filter aggregator module 301 and/or the filter aggregator and query module 203 may comprise volatile memory for temporarily store the aggregated current context-based information.

The filtered information is provided to at least one of the filter control channel 104 and/or the at least one communication channel 103 and displayed on the user interface 101‴B or the meeting application 101"B on the second user device 101'B.

This implementation option allows for presenting current health record data to the doctor in addition or as an alternative to presenting only past contextually relevant EHR data to the doctor during the live telehealth meeting. The current health record data is captured and derived from the current telehealth conversation data, e. g. voice 103a, text 103b, video 103c, loT monitoring 103d.

If a record for a specific patient exists in the EHR system 105 from previous visits, a second mode of operation may allow for aggregating extracted current context-based information inside the RTC filter aggregator 301 or the RTC filter aggregator module 301, wherein this current context-based information has been extracted from the current information inside the RT filters 201a, 201b, 201c, 201d, 202 according to a predefined context selection rule.

This aggregation of the current context-based information comprises aggregating or combining the current context-based information that is provided as output from the RT filters 201a, 201b, 201c, 201d with the filter control rule provided in the RT filter API module 202 in order to form, compose or build a query list for historic EHR records. The composed query list is used for querying the EHR repository 105 of history records.

In other words, during an ongoing telehealth meeting the different RT filter types 201a, 201b, 201c, 201d, 202 continuously receive meeting inputs 103a, 103b, 103c, 103d, 103e as current information which is provided by the meeting application server 101a. After extracting current context-based information from the ongoing telehealth meeting inputs 103a, 103b, 103c, 103d, 103e, the current extracted context-based information is aggregated by the aggregator function 301, which then in combination with the filter aggregator and query module 203 queries the external EHR system 105 for EHR records.

"Aggregation" in this context means, that the aggregator 301 puts together a list of relevant terms, e. g. medical terms, or intents for querying the EHR system 105. The intent may be identified by and received from the different RT filter types 201a, 201b, 201c, 201d, 202 and a query list is composed.

The interface 106 between the RT filter aggregator and query function 203 and the external EHR system 105 is a suitable standard based or proprietary interface that the EHR system exposes. One prominent example for a standard interface is HL7-FHIR, but other options exist.

In order to switch between the at least two different operation modes, the filter control rule provided in the filter control channel 104 may comprise a mode switching flag indicating whether only current information of a patient meeting, only past EHR records based on the current information or a combination thereof is to be queried.

In stage S301 the different types of telehealth meeting inputs 103a, 103b, 103c, 103d, 103e are provided to the different RT filter types 201a, 201b, 201c, 201d, 202.

RT voice input 103a is received in the RT voice filter 201a by a pre-processing module 201a'. The pre-processing module 201a' extracts raw text 103a', e. g. plain text in ASCII format, from the voice stream 103a by, for example, using S2T conversion.

After the S2T conversion in stage S303, the raw text 103a' extracted from voice traffic 103a is provided to raw text module 201a" for processing. The raw text 103a' in raw text module 201a" comprises text of patient and doctor.

If in stage S301 text 103b is received, e. g. from an IM application and/or from a chat application, this is directly forwarded to the raw text module 201a" substantially without pre-processing.

Consequently, in stage S303 the raw text 103b from text traffic 103b is provided to the raw text module 201a" for processing. The raw text 103b in raw text module 201a" comprises text of patient and doctor.

In stage S304 the text 103a', 103b is forwarded to from the raw text module 201a" to the RT text data analytics module 201a‴.

In order to reduce the information provided by the raw text module 201a", the RT text data analytics module 201a‴ extracts the current context-based information from the current information 103a, 103b according to a predefined context selection rule.

The context selection rule for text may be based on a rule, e. g. based on keywords, or the context selection rule uses NLP - Intent. The context selection rule may also comprise continuous real-time comparison of received text 103b against configured or trained datasets. The RT text data analytics module 201a‴ also adds identified intents to filter aggregator 301.

If in stage S301 video traffic 103c is received, e. g. from a video stream of a meeting application 101"A, 101"B, this is directly forwarded to the raw video module 201c" substantially without pre-processing.

Consequently, in stage S303 the raw video 103c is provided to the raw video module 201c" for processing. The raw video 103c in the raw video module 201c" comprises video of the patient.

In stage S304 the video 103c is forwarded from the raw video module 201c" to the RT video data analytics module 201c‴.

In order to reduce the information provided by the raw video module 201c", the RT video data analytics module 201c‴ extracts the current context-based information from the current information 103c according to a predefined context selection rule.

The context selection rule for video may be based on continuous real-time comparison of the received patient video against a trained dataset of body part images. In this way, for example in a first level, a body part, e. g. the face or tongue, is recognized by a body part recognition algorithm: In a second level an anomaly of the body part is detected, e. g. a coated tongue. The RT video data analytics module 201c‴ also adds identified intents to filter aggregator 301. Even if machine learning is not necessary it may support recognizing of body parts.

If in stage S301 loT data traffic 103d is received, e. g. live loT monitoring data 103d via a data channel 103 of a meeting application 101"A, 101"B, this is directly forwarded to the raw IoT data module 201d" without pre-processing.

Consequently, in stage S303 the raw loT data 103d is provided to raw loT data module 201c" for processing. The raw IoT data 103d in the raw IoT data module 201d" comprises loT data of the patient's wearable.

In stage S304, the loT data 103d is forwarded from the raw IoT data module 201d" to the RT loT data analytics module 201d"'.

In order to reduce the information provided by the raw IoT data module 201d", the RT loT data analytics module 201d‴ extracts the current context-based information from the current information 103d according to a predefined context selection rule.

The context selection rule for loT data may be based on live loT data values analyzed from patient's wearable BT (Bluetooth) device, e. g. blood pressure values, blood sugar values. In an example, only the loT data values are extracted which relate to a certain medical indication. The RT loT data analytics module 201d‴ also adds identified anomalies to filter aggregator 301. Data generated in the RT loT data analytics module 201d‴ may override or overwrite a risk factor set by the doctor via RT filter API 202.

If in stage S301 a filter control rule is received, e. g. a filter control rule via filter control channel 104 of a user interface 101‴B, this is directly forwarded to the RT filter API module 202 substantially without pre-processing.

Consequently, in stages S303, S304 the RT filter API module 202 sets up filter parameter for filtering the aggregated current context-based information according to the filter control rule 103e and/or for generating a query list for querying a repository 105 of history records.

The filter parameter may comprise a time frame filter where, for example, time period values of one week, one month, six-month, 1 year, 5 years are defined to be selected. The selection may be made by a selector or slider provided in the user interface 101‴B. Some examples of filter parameters may comprise a correlator that in an example may be set to "neck-nose-ear" correlation, a risk factor that in an example may be set to low and/or a criticality that in an example may be set to low.

The filter criteria and settings derived from the filter control rule 103e are added to the filter aggregator 301 or RTC filter aggregator module 301. Some of the criteria and values may be pre-set and will be overridden and/or overwritten in case of RT data received from any sources 103a, 103b, 103c, 103d, 103e.

The RT voice analytics module 201a comprises the sub-modules voice pre-processing module 201a', raw text module 201a" and RT text data analytics module 201a"'.

The RT text analytics module 201b comprises the sub-modules raw text module 201a" and RT text data analytics module 201a‴.

The RT video analytics module 201c comprises the sub-modules raw video module 201c" and RT video data analytics module 201c‴.

The RT loT analytics module 201d comprises the sub-modules raw IoT data module 201d" and RT loT data analytics module 201d"'.

The RT voice analytics module 201a, the RT text analytics module 201b, the RT video analytics module 201c, the RT loT analytics module 201d and the RT filter API module 202 are configured for parallel processing of their relevant input 103a, 103b, 103c, 103d, 103e. In this way during stages S301 to S304 parallel processing may be possible.

In the following the querying of filtered information is shown.

In stage S305 the output of filter modules 201a, 201b, 201c, 201d, 202 is collected and aggregated inside the RTC filter aggregator module 301. Like the filter aggregator and query module 203 the aggregator module 301 uses substantially only transient data which are not stored. In example, the Aggregator module 301 uses similar to the filter aggregator and query module 203 volatile memory for storing the aggregated and/or queried information.

In an example, following elements may be aggregated in the aggregator module 301.

The output of the RT voice filter analytics module 201a and/or of the RT text filter analytics module 201b may be current context-based information like, for example, the information that the patient realizes a left ear pressure, has a sore throat since last week and feels tired. The provided output of the RT voice filter analytics module 201a and/or of the RT text filter analytics module 201b thus may be a current voice medical collection and/or a current text medical collection comprising "left ear pressure", "sore throat since last week" and "tired".

The output of the RT video filter analytics module 201c may be current context-based information like, for example, the information that the patient has a coated tongue or looks tired. The provided output of the RT video filter analytics module 201c thus may be a current video medical collection comprising "coated tongue" and "looking tired".

The output of the RT loT filter analytics module 201c may be current context-based information like, for example, the information that the patient has normal blood pressure and normal blood sugar. The provided output of the RT loT filter analytics module 201c thus may be a current video medical collection comprising "live measured blood pressure, blood sugar = no anomaly detected". As a consequence of this extracted information showing no anomalies, no change of current risk factor settings is made and/or no settings provided by the filter control rule 103e are overwritten.

The output of the RT filter API module 202 may be a filter control rule 103e, for example, the time frame for track back history records is 1 year, the correlator is set to neck-nose-ear correlation, a risk factor is set to low, and a criticality is set to low. The provided output of RT filter API module 202 may be a collection of filter control rules, e. g. "timeframe = 1Y " / "correlator = neck-nose-ear " / "riskfactor = low" / "criticality = low".

Consequently, the following elements are provided to the filter aggregator and query module 203 as part for an aggregator query towards the EHR system 105. The elements comprise "left ear pressure", "sore throat since last week", "tired", "coated tongue", "looking tired", "live measured blood pressure, blood sugar = no anomaly detected", "timeframe = 1Y " / "correlator = neck-nose-ear " / "riskfactor = low" / "criticality = low".

If only current health information is desired, in stage S306 the aggregated elements of current context-based information is filtered according to the filter control rule 103e and corresponding filtered information is generated based on the filter control rule 103e, for example, "timeframe = 1Y " / "correlator = neck-nose-ear " / "riskfactor = low" / "criticality = low"

If also historical health information is desired, in stage S306 the RT filter aggregator and query module 203 take the provided elements and prepare a query list for querying the EHR system 105.

Querying the EHR system 105 comprises a request to the EHR system 105 and a response from the EHR system 105, for example, over an interface according to the HL7-FHIR standard. In response to the request, a list of EHR reference elements is provided in accordance with to the query list. The EHR reference elements comprise a link and/or a reference to a corresponding EHR history record. An EHR reference element may comprise an ID (Identifier), date, headline, etc. of a corresponding EHR history record.

The results and/or return list delivered back from the EHR system 105 to the query of the RT filter aggregator and query function 203 comprises a list of potentially and contextually relevant records from past patient visits.

The term "relevant" means relevant in the context of a particular current telehealth meeting. The relevance may be based on matching keywords or intents detected from the RT filters 201a, 201b, 201c, 201d, 202.

The list of returned records comprises some data elements per record. The data elements per record comprise in an example an identifier (ID), a reference, a date and a headline. The ID in combination with the reference may be provided to the doctor in a way such that once the record is presented at the doctor's RTC meeting application client B GUI 101"'B the doctor is able to click on the record. This click will cause fetching the record notes and/or details from the EHR system 105. The data indicates when the visit that is recorded in a particular EHR record happened, and the headline provides a summary about the corresponding visit such as the topic and/or the diagnosis.

In an example, the actual medical notes, i. e. the details to the record, are not all fetched immediately from the EHR system in order to reduce the data load.

Also, the details of the returned medical records may be not saved and/or stored in the RTC system 100 environment due to privacy reasons. However, the detailed notes from any of the records contained in the return list can be fetched later, typically at the time the doctor clicks on any of the delivered return list record elements, once the return list got presented at doctor's RTC meeting application client B GUI 101"'B.

In other words, substantially only links and/or references to the history records together with a short summary of the details are provided as a response to a query and details of the records are only loaded if desired by the doctor.

In terms of the contextually filtered output of EHR records, the list of references to the EHR records is used instead of the full EHR records themselves. The references and/or links help meeting the high privacy requirements with regard to health records and to keep the data load low. The filtered output of EHR reference list elements is transmitted back to the RT filter aggregator and query function module 203.

In stage S307 the generated EHR reference list elements are fed back to the RTC meeting application server function 101a for insertion into the appropriate media streams 103, 103a, 103b, 103c, 103d, 103e towards the doctor's RTC application client 101"B and/or into the filter control channel 104 towards the user interface 101"'B. For providing the filtered information to at least one of the filter control channel 104 and/or the at least one communication channel 103 different techniques may be used. A video overlay technique inserts data into a video stream, for example, as list elements, such as video ticker elements, etc., or inserts data into a video stream as video annotations, i. e. with data annotated to a patient's body parts, e. g. a coated tongue. Another video overlay technique uses a data channel of the RTC system 100, e. g. one of the at least one communication channel, in particular a WebRTC data channel in case of a WebRTC system. The transmitted data (filtered information) may be inserted into a video window locally at the doctor's client side, e. g. into meeting application on the doctor's user device 101"B, for example if these are transmitted through the filter control channel 104.

From the doctor's user experience perspective, the presentation of the returned, contextually filtered EHR record references is made within the UI (user interface) 101"B, 101‴B of the doctor's telehealth meeting application client 101"B or web browser. In case of a remote video telehealth meeting, the EHR record references are presented on the video window in order to make it easier for the doctor to keep eye contact with the patient, by still reading the filtered health records. In case of an audio and/or text only telehealth meeting where no video is used any other UI 101"B, 101‴B portions and/or GUI 101"B, 101‴B portions of the doctor's telehealth meeting application client 101"B or web browser is used to present the filter output.

The result of the filtered EHR data presentation is that the doctor gets automatically presented and updated potential contextually relevant past health record data directly through his/her telehealth meeting application GUI 101"B during the medical consultation of the patient by the doctor. This presentation of information supports an automated assistance function for the doctor. The assistance function assists the doctor to create good diagnosis, but the diagnosis itself is still made by the doctor.

In other words, for presenting the return list (EHR reference elements) to the doctor's RTC meeting application client B 101"B, the list with its EHR reference elements is transmitted back from the RT filter aggregator and query function 203 to the RTC meeting application server 101a for being fed into the RTC meeting system. Options in terms of suitable RTC system and/or meeting media channels 103, 104 for returning the EHR reference elements to the RTC meeting application B 101"B for GUI presentation are transporting the result within a WebRTC data channel and/or within the patient video stream 103c, e. g. as video overlay, within a particular video stream as a list or as a ticker or within a video stream as video annotations to patient's body parts inside the video, e. g. using methods of augmented reality. Another option for returning the EHR reference elements to the RTC meeting application B 101"B for GUI presentation may be within any other suitable standard based or proprietary interface, also depending on the technology of the RTC system used, which also could be based on SIP. This suitable interface may be linked to the EHR reference elements by a meeting ID in order to ensure the returned information is presented on the corresponding user interface.

An example of a presentation of RT filter results is shown in Table 1. Table 1 shows a list of 4 EHR references which are returned and presented to doctor's meeting application B GUI 101"B.

**Table 1**

| | |
|---|---|
| • 20 days ago: | Diagnosed Sinusitis |
| • 6 months ago: | Diagnosed sore throat |
| • 8 months ago: | Diagnosed Sinusitis |
| • 12 months ago: | Sore throat diagnosis with fever |

The record titled "diagnosed Sinusitis" 20 days ago is presented to the doctor, because this indication may be a hint for the doctor for a reason of the left ear pressure due to a potentially still swollen eustachian tube.

The record titled "diagnosed sore throat" 6 months ago is presented to doctor due to the correlation criteria "neck-nose-ear" being set by the doctor.

The record titled "diagnosed Sinusitis" 8 months ago is presented to doctor considering the series of Sinusitis, because there may be a probability for a nasal septum issue and thus lack of ventilation.

The record titled "sore throat diagnosis with fever" 12 months ago may be selected because the series of sore throat is an indicator for a weakened immune system.

The EHR reference ID allows the doctor to click the presented record, to access the EHR system 105 for more detailed information.

As a result, the doctor sees the filtered EHR reference elements from previous patient visits, directly presented within the RTC meeting application client B GUI 101"B, potentially relevant for the doctor for this current live telehealth meeting with the given patient, to assist for his/her diagnosis. This result is presented regardless of which RT filter 201a, 201b, 201c, 201d, 202 has captured and contributed to the aggregated search result, and regardless of the source of information, voice 201a, text 201b, video 201c, loT monitoring data 201d or an additional input data coming from doctor or nurse.

It is to be noted that in addition to or as an alternative to EHR reference elements which refer to past EHR records, also current health data may be presented by the system to the doctor. The current health data may be generated by capturing and filtering of current patient consultation, e. g. from RT voice filter 201a, RT video filter 201c, RT loT data filter 201d, etc.

Any of the RT filter modules 201a, 201b, 201c, 201d, 202, the filter aggregator and query module 203 and the RTC filter aggregator module 301 may be implemented as a software module and/or a hardware module. In an example, the modules are implemented as microservices.

Fig. 4 shows a flow chart for a method for communication support according to an exemplary embodiment of the present invention.

The method starts in an idle stage S400. In stage S401 at least one communication channel is routed between a first user device and a second user device via a filter service 101 and a filter control channel is established between at least one of the first user device 101'A and the second user device 101'B as one end and the filter service 101 as the other end. The at least one communication channel 103 is associated with the filter control channel 104.

In stage S402 a filter control rule 103e is received inside the filter control channel 104.

In stage S403 current information is analyzed wherein the current information is exchanged inside the at least one communication channel 103 between the first user device 101'A and the second user device 101'B. Furthermore, current context-based information is extracted from the current information in accordance with a predefined context selection rule. In an example, the context selection rule is stored in RT filter modules 201a, 201b, 201c, 201d.

In stage S404 the method provides for aggregating the current context-based information extracted from the current information.

In stage S405 the aggregated current context-based information is filtered according to the filter control rule 103e and filtered information is generated based on the filter control rule 103e.

The filtered information is provided to at least one of the filter control channel and/or the at least one communication channel in stage S406.

In stage S407 the method is terminated.

As an option all RT filter types 201a, 201b, 201c, 201d, 202 are implemented in a system 100 or only some of the RT filter types 201a, 201b, 201c, 201d, 202 are implemented. Also, selected RT filter types 201a, 201b, 201c, 201d, 202 can be de-activated or are not active in some circumstances. For example, if a patient has deaf and dumb disabilities, there is no reason to have RT voice filter 201a activated, as also the RTC meeting application's voice function of the meeting application on the first user device 101"A and corresponding channels 103 are not used. In such a case, text chat is being used instead of voice communication. In another example, if a patient does not want to use video or does not have a video camera available, then the RT video filter 201c is not used because no video stream 103 is available.

The meeting application on the first user device 101"A and the meeting application on the second user device 101"B may be implemented as RTC meeting application clients. The clients can be a rich client, e. g. desktop applications or browser-based clients, running on any PC or laptop. Clients can also be an application or PWAs (Browser-based Progressive Web Applications) running on mobile devices, smartphones or tablets. If the RTC meeting application server system 100 is a WebRTC based system, then the clients are WebRTC clients.

A meeting ID (meeting identifier) is used for dataset correlation as pertaining to a given meeting and/or session, i. e. a communication channel 103: In order to correlate different keywords or intents received from different RT filter types 201a, 201b, 201c, 201d, 202, a meeting Id (RTC system meeting Id number) is being included with any data sets exchanged at the interfaces. The meeting ID allows for distinguishing different telehealth meetings that are conducted at the same time. Sessions may be held simultaneously and therefore may use a meeting ID in order to associate data that belong together with another. Such association of data may be useful for data sets that are exchanged over the interface and/or connection between RTC meeting application server 101a and the various RT filters 201a, 201b, 201c, 201d, 202, the connection between the various RT filters 201a, 201b, 201c, 201d, 202 and the RT filter aggregator and query module 203, and the connection between the RTC meeting application server 101a and RTC meeting application clients 101"A, 101"B. The meeting ID may also be used for an RTC signaling connection associated with the at least one communication channel.

Server functions, i. e server services such as RTC meeting application server service 101a, the various RT filter services 201a, 201b, 201c, 201d, 202 and the RT filter aggregator and query service 203 may be implemented following a microservice paradigm. A microservice architecture or microservice paradigm is a variant of the service-oriented architecture (SOA) structural style. It arranges an application as a collection of loosely coupled services. In the microservice paradigm, services are fine-grained, and the protocols are lightweight. Loose coupling reduces all types of dependencies and the complexities around it as service developers do not need to care about the users of the service, they do not force their changes onto users of the service. Therefore, it allows organizations developing software to grow fast and big as well as use off the shelf services easier. The communication requirements are less. However, it comes at a cost to maintain the decoupling. Interfaces need to be designed carefully and treated as a public API. Techniques like having multiple interfaces on the same service, or multiple versions of the same service, to not break existing users' code. However, in the sense of the invention a server services implementation paradigm of "Microservices" is not a limiting factor for this invention, but only an example how the services can be implemented. Further, other implementation paradigms are possible to implement the server services including traditional monolith architectures.

Server services may communicate over data exchange interfaces. These interfaces are also used for server function to server function communication. Such interfaces which are used to exchange data between them may be based on any standard or proprietary interfaces available for inter service communication. For example, in Microservice architectures the protocols HTTP, HTTP/2, HTTP/3 or QUIC (Quick UDP Internet Connections) may be used for synchronous communications. In one example, the combination of HTTP with REST (Representational State Transfer) is being used. Where saving internal transport overhead is needed, other transport options may be used as well. For asynchronous communication between the sever services, Webhooks provided by the server services, i. e. Stubs, may be used, enabling services to subscribe to events from the other service. JSON (JavaScript Object Notation) or Protocol Buffers can be used as interface description language and message interchange format. Also, gRPC - a high performance, open source, platform/OS and programming language agnostic RPC framework - may be used as a suitable Remote Procedure Call (RPC) framework.

As part of the consultation workflow, the RT filters 201a, 201b, 201c, 201d, 202 may also be determined and/or set during the "nurse intake" phase using any of the RT filter types 201a, 201b, 201c, 201d, 202 and/or methods, or using data manually entered into the system 100 by the nurse. Nurse intake means that a nurse prepares for the actual remote patient - doctor meeting by, for example, actually meeting the patient, e. g. taking patient out of a virtual waiting room, before the nurse transfers the patient to the doctor. Also, conference type arrangements may exist, with patient, doctor and nurse being in the same conference call 103. Consequently, any input contributed by the doctor during any of the disclosed RT filters 201a, 201b, 201c, 201d, 202 may also be determined by input from the nurse. In particular, the initial setup of the filters 201a, 201b, 201c, 201d, 202 and/or of the filter control rule 103e may be made by the nurse.

Current health issues presentation may be made if no previous EHR records are available and/or the actual state of a patient may be examined. Current health data may also be presented by the system 100 to the doctor as an alternative to or in addition to past EHR record filtering and past EHR record presentation. The current heath data may be gathered from capturing and filtering of current patient consultation, e. g. from RT voice filter 201a, RT video filter 201c, RT loT data filter 201d, etc.

The system 100 shown in Fig. 1 is an intelligent, context aware and real-time based EHR filtering system 100 that supports a doctor's diagnosis during live telehealth meetings. Different real-time input data such as voice 103a, text 103b, video 103c, IoT monitoring 103d, and real-time filter data 103e from a doctor are leveraged. Particularly the real-time filter data 103e, 202 allows for selecting a period, dependencies and/or criticality of extracted and/or queried information. Substantially all filters 201a, 201b, 201c, 201d, 202 may be controlled through the RTC video application system 100. The real-time input data voice 103a, text 103b, video 103c, loT monitoring data 103d are provided by a meeting application 101"A, 101"B. The real-time filter data 103e may be provided by an API (Application Programming Interface) via a data channel and/or via the filter control channel 104 and/or by the meeting application 101"A, 101"B or the user interface 101"'B.

Providing an aggregation function 301 allows for fetching substantially only contextually relevant EHR records and/or EHR references. These contextually filtered records may be fed back to the doctor's video application GUI 101"'B.

Filtered information with medical relevance may either be displayed as body part annotation in a video feed in the video window or as a list but also in a video window. Annotating a body part when patient body parts shown into the video camera may mean that the information is visually linked to the corresponding body part whereas displaying a list may not have such a visual link to an object although the information is displayed. The integration of medical relevant information into a video stream of a video meeting may help a doctor to keep eye contact with a patient during reading the medical records. The integration of medical relevant information allows to combine two technically different solutions of an RTC meeting application and an EHR system 105. Thus, two technically different systems, namely the RTC telehealth meeting system and the EHR system 105 are combined. By this combination an intelligent filter may be provided.

This combination of information and RTC meeting application including video streaming may support a good quality of telehealth meeting results, due to considering contextually relevant past records which the doctor otherwise would not have taken into consideration

Selectively overlaying past and current health records information into a telehealth meeting application GUI 101"A, 101"B, 101‴B, based on an intelligent contextual filter, leverages scene or object identification in the video feed, spoken words or phrases during the consultation, written text during the consultation, input from connected monitoring devices, e. g. loT devices, further filter inputs from the doctor or nurse, such as period, dependencies, criticality, and observations in medical health records.

The system 100 may be used by a doctor or practitioner during patient interactions. It can guide practitioner for good patient outcomes and more immersive experience. It can also be used for an expert e-consultation in other industries, for example, in manufacturing using ticket data from systems like ServiceNow.

Using a meeting application for doctors' consultation may result in quickly overwhelming a video feed with too many past health records. Particularly assessing the history of older people probably would result into hundreds of annotated records. The concept of providing an intelligent and context aware filter not only takes into account which of the patient's body parts are currently shown into the camera, but also analyzes the content that is discussed, e. g. in a voice dialog, inputted by text, e. g. if patients with disabilities communicate, inputted by IoT monitoring wearables and an additional real-time filter 202 inputted and/or controlled by the doctor or nurse. The real-time filter may be set before or during the telehealth meeting and may allow for selecting a relevant period, dependencies, a criticality, etc. All these inputs, which may all be routed via the RTC system 100, including the input from the doctor, are aggregated by an aggregation function 301 and the aggregated and contextually filtered input is then fetching in real-time relevant patient data and/or references from the EHR system 105. The fetched data and/or references are fed back to a video window operated by the doctor. The feedback may be provided as annotation to a body part and/or as a list inside the application GUI 101"A, 101"B, 101"B of the telehealth video system100.

It should be noted that the term "comprising" does not exclude other elements or steps and the "a" or "an" does not exclude a plurality. Further, elements described in association with different embodiments may be combined.

### Reference numerals

- 100: communication system
- 101: filter service
- 101a: meeting application server
- 101b: filter unit
- 101'A: first user device
- 101"A: meeting application on the first user device
- 101'B: second user device
- 101"B: meeting application on the second user device
- 101"'B: user interface
- 102: communication server
- 103: at least one communication channel
- 103a: voice traffic
- 103a': text extracted from voice traffic
- 103b: text traffic
- 103c: video traffic
- 103d: data traffic
- 103e: filter control rule
- 104: filter control channel
- 105: repository
- 105': local repository
- 105": cloud-based repository
- 106: interface
- 107: proprietary repository client

- 201a: RT voice analytics module
- 201a': voice pre-processing module
- 201a": raw text module
- 201a"': RT text data analytics module
- 201b: RT text analytics module
- 201c: RT video analytics module
- 201c": raw video module
- 201c"': RT video data analytics module
- 201d: RT loT analytics module
- 201d": raw loT data module
- 201d"': RT loT data analytics module
- 202: RT filter API module
- 203: filter aggregator and query module
- 301: RTC filter aggregator module
- S301 - S307: stages
- S400 - S407: stages

## Claims

1. A method for communication support in a communication server (102), comprising:
- routing at least one communication channel (103) between a first user device (101'A) and a second user device (101'B) through a meeting application server (101a), wherein a filter service (101) has access to the at least one communication channel (103);
- establishing a filter control channel (104) between the first user device (101'A) and the filter service (101) and/or between the second user device (101'B) and the filter service (101);
- applying a filter control rule (103e), by the filter service, provided inside the filter control channel (104) by the first user device (101'A) and/or the second user device (101'B);
- analyzing, by the filter service (101), current information (103a, 103b, 103c, 103d) which is exchanged inside the at least one communication channel (103) between the first user device (101'A) and the second user device (101'B);
- extracting, by the filter service (101), current context-based information from the current information according to a predefined context selection rule;
- aggregating, by the filter service (101), the current context-based information extracted from the current information (103a, 103b, 103c, 103d);
- filtering, by the filter service (101), the aggregated current context-based information according to the filter control rule (103e) and generating filtered information based on the filter control rule (103e);
- providing, by the filter service (101), the filtered information to at least one of the filter control channel (104) and/or the at least one communication channel (103).

2. The method of claim 1, further comprising:
displaying the filtered information on a user interface (101"'B).

3. The method of claim 2, further comprising:
operating the user interface (101‴B) by at least one operation method selected from the group of operation methods consisting of:
- gesture operation;
- input device operation;
- keyboard operation;
- touch screen operation;
- mouse operation;
- pointing device operation.

4. The method of one of claims 1 to 3, further comprising:
setting the context selection rule via the filter control channel (104).

5. The method of one of claims 1 to 4, further comprising:
associating the at least one communication channel (103) with the filter control channel (104) by generating a meeting identifier.

6. The method of claim 5, further comprising:
associating the meeting identifier with a user identifier.

7. The method of one of claims 1 to 6, further comprising
associating the at least one communication channel (103) with a repository (105) of history records stored for at least one user of the first user device (101'A) and/or the second user device (101'B) in the filter service (101);
wherein aggregating the current context-based information comprises aggregating the current context-based information with the filter control rule (103e) in order to form a query list;
wherein filtering the aggregated current context-based information according to the filter control rule (104) comprises querying the repository of history records with the query list.

8. The method of one of claims 1 to 7, wherein analyzing current information comprises storing a raw data stream.

9. The method of one of claims 1 to 8, further comprising:
deleting current context-based information and/or the at least one history record retrieved from a/the repository (105) of history records available in the filter service (101).

10. The method of one of claims 1 to 9, further comprising:
storing at least a part of the extracted current context-based information and/or provided filtered information in a/the repository (105) of history records.

11. The method of one of claims 1 to 10, wherein at least one process of the group of processes consisting of:
- providing a filter control rule (103e) inside the filter control channel (104);
- extracting current context-based information from the current information;
- aggregating the current context-based information; and
- filtering the aggregated current context-based information;
is processed in real time.

12. The method of one of claims 1 to 11, wherein analyzing the current information comprises converting the collected current information into a common format.

13. A program element, which when being executed by a processor is adapted to carry out the method for communication support of one of claims 1 to 12.

14. A computer-readable medium comprising program code, which when being executed by a processor is adapted to carry out the method for communication support of one of claims 1 to 12.

15. A communication system (100) comprising:
- a communication server (102);
- a first user device (101'A);
- a second user device (101'B);
- the communication server (102) comprising:
- a meeting application server (101a);
- a filter service (101);
wherein the meeting application server (101a) is adapted to route at least one communication channel (103) between the first user device (101'A) and the second user device (101'B);
wherein the filter service (101) is adapted to establish a filter control channel (104) between the first user device (101'A) and the filter service (101) and/or between the second user device (101'B) and the filter service (101); and
wherein the filter service (101) is adapted for applying a filter control rule (103e) provided inside the filter control channel (104) by the first user device (101'A) and/or the second user device (101'B);
wherein the filter service (101) is adapted for analyzing current information (103a, 103b, 103c, 103d), which is exchanged inside the at least one communication channel (103) between the first user device (101'A) and the second user device (101'B);
wherein the filter service (101) is adapted for extracting current context-based information from the current information (103a, 103b, 103c, 103d) according to a predefined context selection rule;
wherein the filter service (101) is adapted for aggregating the current context-based information extracted from the current information;
wherein the filter service (101) is adapted for filtering the aggregated current context-based information according to the filter control rule and for generating filtered information based on the filter control rule (103e); and
wherein the filter service (101) is adapted for providing the filtered information to at least one of the filter control channel (104) and/or the at least one communication channel (103).

## Patentansprüche

1. Verfahren zur Kommunikationsunterstützung in einem Kommunikationsserver (102), umfassend:
- Routen mindestens eines Kommunikationskanals (103) zwischen einem ersten Benutzergerät (101'A) und einem zweiten Benutzergerät (101'B) durch einen Meeting-Anwendungsserver (101a), wobei ein Filterdienst (101) Zugriff auf den mindestens einen Kommunikationskanal (103) hat;
- Einrichten eines Filtersteuerungskanals (104) zwischen dem ersten Benutzergerät (101'A) und dem Filterdienst (101) und/oder zwischen dem zweiten Benutzergerät (101'B) und dem Filterdienst (101);
- Anwenden, durch den Filterdienst, einer Filtersteuerregel (103e), die innerhalb des Filtersteuerkanals (104) durch das erste Benutzergerät (101'A) und/oder das zweite Benutzergerät (101'B) bereitgestellt wird;
- Analysieren, durch den Filterdienst (101), von aktuellen Informationen (103a, 103b, 103c, 103d), die innerhalb des mindestens einen Kommunikationskanals (103) zwischen dem ersten Benutzergerät (101'A) und dem zweiten Benutzergerät (101'B) ausgetauscht werden;
- Extrahieren, durch den Filterdienst (101), von aktuellen kontextbasierten Informationen aus den aktuellen Informationen gemäß einer vordefinierten Kontextauswahlregel;
- Aggregieren, durch den Filterdienst (101), der aktuellen kontextbasierten Informationen, die aus den aktuellen Informationen (103a, 103b, 103c, 103d) extrahiert wurden;
- Filtern, durch den Filterdienst (101), der aggregierten aktuellen kontextbasierten Informationen gemäß der Filtersteuerregel (103e) und Erzeugen gefilterter Informationen basierend auf der Filtersteuerregel (103e);
- Bereitstellen, durch den Filterdienst (101), der gefilterten Informationen an mindestens einen der Filtersteuerkanäle (104) und/oder den mindestens einen Kommunikationskanal (103).

2. Verfahren nach Anspruch 1, ferner umfassend:
Anzeigen der gefilterten Informationen auf einer Benutzeroberfläche (101‴B).

3. Verfahren nach Anspruch 2, ferner umfassend:
Bedienen der Benutzerschnittstelle (101‴B) durch mindestens eine Bedienmethode, ausgewählt aus der Gruppe der Bedienmethoden bestehend aus:
- Gestensteuerung;
- Bedienung des Eingabegeräts;
- Tastaturbedienung;
- Touchscreen-Bedienung;
- Mausbedienung;
- Bedienung des Zeigegeräts.

4. Verfahren nach einem der Ansprüche 1 bis 3, ferner umfassend:
Festlegen der Kontextauswahlregel über den Filtersteuerkanal (104).

5. Verfahren nach einem der Ansprüche 1 bis 4, ferner umfassend:
Zuordnen des mindestens einen Kommunikationskanals (103) zum Filtersteuerkanal (104) durch Erzeugen einer Sitzungskennung.

6. Verfahren nach Anspruch 5, ferner umfassend
Zuordnen der Besprechungskennung zu einer Benutzerkennung.

7. Verfahren nach einem der Ansprüche 1 bis 6, ferner umfassend
Zuordnen des mindestens einen Kommunikationskanals (103) mit einem Repository (105) von Verlaufsdatensätzen, die für mindestens einen Benutzer des ersten Benutzergeräts (101'A) und/oder des zweiten Benutzergeräts (101'B) im Filterdienst (101) gespeichert sind;
wobei das Aggregieren der aktuellen kontextbasierten Informationen das Aggregieren der aktuellen kontextbasierten Informationen mit der Filtersteuerregel (103e) umfasst, um eine Abfrageliste zu bilden;
wobei das Filtern der aggregierten aktuellen kontextbasierten Informationen gemäß der Filtersteuerungsregel (104) das Abfragen des Repositorys von Verlaufsdatensätzen mit der Abfrageliste umfasst.

8. Verfahren nach einem der Ansprüche 1 bis 7, wobei das Analysieren aktueller Informationen das Speichern eines Rohdatenstroms umfasst.

9. Verfahren nach einem der Ansprüche 1 bis 8, ferner umfassend:
Löschen aktueller kontextbasierten Informationen und/oder des mindestens einen Verlaufsdatensatzes, der aus einem/dem Repository (105) von Verlaufsdatensätzen abgerufen wurde, die im Filterdienst (101) verfügbar sind.

10. Verfahren nach einem der Ansprüche 1 bis 9, ferner umfassend:
Speichern mindestens eines Teils der extrahierten aktuellen kontextbasierten Informationen und/oder der bereitgestellten gefilterten Informationen in einem/dem Repository (105) von Verlaufsdatensätzen.

11. Verfahren nach einem der Ansprüche 1 bis 10, wobei mindestens ein Prozess aus der Gruppe der Prozesse, bestehend aus:
- Bereitstellen einer Filtersteuerungsregel (103e) innerhalb des Filtersteuerungskanals (104);
- Extrahieren von aktuellen kontextbasierten Informationen aus den aktuellen Informationen;
- Aggregieren der aktuellen kontextbasierten Informationen; und
- Filtern der aggregierten aktuellen kontextbasierten Informationen;
in Echtzeit verarbeitet wird.

12. Verfahren nach einem der Ansprüche 1 bis 11, wobei das Analysieren der aktuellen Informationen das Konvertieren der gesammelten aktuellen Informationen in ein gemeinsames Format umfasst.

13. Programmelement, das bei Ausführung durch einen Prozessor dazu ausgelegt ist, das Verfahren zur Kommunikationsunterstützung nach einem der Ansprüche 1 bis 12 auszuführen.

14. Computerlesbares Medium, welches einen Programmcode umfasst, der bei Ausführung durch einen Prozessor dazu ausgelegt ist, das Verfahren zur Kommunikationsunterstützung nach einem der Ansprüche 1 bis 12 auszuführen.

15. Ein Kommunikationssystem (100), umfassend:
- einen Kommunikationsserver (102);
- ein erstes Benutzergerät (101'A);
- ein zweites Benutzergerät (101'B);
- wobei der Kommunikationsserver (102) umfasst:
- einen Meeting-Anwendungsserver (101a);
- einen Filterdienst (101);
wobei der Besprechungsanwendungsserver (101a) dazu ausgelegt ist, mindestens einen Kommunikationskanal (103) zwischen dem ersten Benutzergerät (101'A) und dem zweiten Benutzergerät (101'B) zu routen;
wobei der Filterdienst (101) dazu ausgelegt ist, einen Filtersteuerkanal (104) zwischen dem ersten Benutzergerät (101'A) und dem Filterdienst (101) und/oder zwischen dem zweiten Benutzergerät (101'B) und dem Filterdienst (101) einzurichten; und
wobei der Filterdienst (101) dazu ausgelegt ist, eine Filtersteuerregel (103e) anzuwenden, welche innerhalb des Filtersteuerkanals (104) durch die erste Nutzervorrichtung (101'A) und/oder die zweite Nutzervorrichtung (101'B) bereitgestellt wird;
wobei der Filterdienst (101) dazu ausgelegt ist, aktuelle Informationen (103a, 103b, 103c, 103d) zu analysieren, die innerhalb des mindestens einen Kommunikationskanals (103) zwischen dem ersten Benutzergerät (101'A) und dem zweiten Benutzergerät (101'B) ausgetauscht werden;
wobei der Filterdienst (101) dazu ausgelegt ist, aktuelle kontextbasierte Informationen aus den aktuellen Informationen (103a, 103b, 103c, 103d) gemäß einer vordefinierten Kontextauswahlregel zu extrahieren;
wobei der Filterdienst (101) dazu ausgelegt ist, die aus den aktuellen Informationen extrahierten aktuellen kontextbasierten Informationen einzurichten;
wobei der Filterdienst (101) dazu ausgelegt ist, die aggregierten aktuellen kontextbasierten Informationen gemäß der Filtersteuerregel zu filtern und gefilterte Informationen basierend auf der Filtersteuerregel (103e) zu erzeugen; und
wobei der Filterdienst (101) dazu ausgelegt ist, die gefilterten Informationen an mindestens einen von dem Filtersteuerkanal (104) und/oder dem mindestens einen Kommunikationskanal (103) bereitzustellen.

## Revendications

1. Procédé de support de communication dans un serveur de communication (102), comprenant:
- l'acheminement d'au moins un canal de communication (103) entre un premier dispositif utilisateur (101'A) et un second dispositif utilisateur (101'B) via un serveur d'application de réunion (101a), dans lequel un service de filtre (101) a accès à l'au moins un canal de communication (103);
- l'établissement d'un canal de contrôle de filtre (104) entre le premier dispositif utilisateur (101'A) et le service de filtre (101) et/ou entre le deuxième dispositif utilisateur (101'B) et le service de filtre (101);
- l'application, par le service de filtre, d'une règle de contrôle du filtre (103e) fournie à l'intérieur du canal de contrôle du filtre (104) par le premier dispositif utilisateur (101'A) et/ou le second dispositif utilisateur (101'B);
- l'analyse, par le service de filtre (101), des informations courantes (103a, 103b, 103c, 103d) échangées à l'intérieur du canal de communication (103) entre le premier dispositif utilisateur (101'A) et le second dispositif utilisateur (101'B);
- l'extraction, par le service de filtre (101), d'informations contextuelles actuelles à partir des informations actuelles selon une règle de sélection de contexte prédéfinie;
- l'agrégation, par le service de filtre (101), des informations contextuelles actuelles extraites des informations actuelles (103a, 103b, 103c, 103d);
- le filtrage, par le service de filtre (101), des informations contextuelles actuelles agrégées selon la règle de contrôle du filtre (103e) et génération d'informations filtrées sur la base de la règle de contrôle du filtre (103e);
- la fourniture, par le service de filtre (101), des informations filtrées à au moins l'un des canaux de contrôle de filtre (104) et/ou à au moins un canal de communication (103).

2. Procédé selon la revendication 1, comprenant également:
l'affichage des informations filtrées sur une interface utilisateur (101‴B).

3. Procédé selon la revendication 2, comprenant également:
l'utilisation de l'interface utilisateur (101"'B) par au moins une méthode d'utilisation choisie dans le groupe de méthodes d'utilisation comprenant:
- commande gestuelle
- commande par le dispositif d'entrée;
- commande par clavier;
- commande par écran tactile;
- commande par souris;
- commande par un dispositif de pointage.

4. Procédé selon l'une des revendications 1 à 3, comprenant également:
la définition de la règle de sélection du contexte via le canal de contrôle du filtre (104).

5. Procédé selon l'une des revendications 1 à 4, comprenant également:
l'association d'au moins un canal de communication (103) au canal de contrôle du filtre (104) en générant un identifiant de réunion.

6. Procédé selon la revendication 5, comprenant également:
l'association de l'identifiant de réunion à un identifiant d'utilisateur.

7. Procédé selon l'une des revendications 1 à 6, comprenant également
l'association d'au moins un canal de communication (103) à un référentiel (105) d'enregistrements d'historique stockés pour au moins un utilisateur du premier dispositif utilisateur (101'A) et/ou du deuxième dispositif utilisateur (101'B) dans le service de filtre (101);
l'agrégation des informations contextuelles actuelles comprenant l'agrégation des informations contextuelles actuelles avec la règle de contrôle de filtre (103e) afin de former une liste de requêtes;
le filtrage des informations contextuelles actuelles agrégées selon la règle de contrôle du filtre (104) consistant à interroger le référentiel d'enregistrements d'historique avec la liste de requêtes.

8. Procédé selon l'une des revendications 1 à 7, dans lequel l'analyse des informations actuelles comprend le stockage d'un flux de données brutes.

9. Procédé selon l'une des revendications 1 à 8, comprenant également:
la suppression d'informations contextuelles actuelles et/ou de l'au moins un enregistrement d'historique extrait d'un/du référentiel (105) d'enregistrements d'historique disponibles dans le service de filtre (101).

10. Procédé selon l'une des revendications 1 à 9, comprenant également:
le stockage d'au moins une partie des informations contextuelles actuelles extraites et/ou des informations filtrées fournies dans un/le référentiel (105) d'enregistrements d'historique.

11. Procédé selon l'une des revendications 1 à 10, dans lequel au moins un processus du groupe de processus constitué par:
- la fourniture d'une règle de contrôle du filtre (103e) à l'intérieur du canal de contrôle du filtre (104);
- l'extraction d'informations contextuelles actuelles à partir des informations actuelles;
- l'agrégation des informations contextuelles actuelles; et
- le filtrage des informations contextuelles actuelles agrégées;
est traité en temps réel.

12. Procédé selon l'une des revendications 1 à 11, dans lequel l'analyse des informations actuelles consiste à convertir les informations actuelles collectées dans un format commun.

13. Élément de programme qui, lorsqu'il est exécuté par un processeur, est conçu pour mettre en œuvre le procédé de support de communication selon l'une des revendications 1 à 12.

14. Support lisible par ordinateur comprenant un code de programme qui, lorsqu'il est exécuté par un processeur, est conçu pour mettre en œuvre le procédé de support de communication selon l'une des revendications 1 à 12.

15. Système de communication (100) comprenant:
- un serveur de communication (102);
- un premier dispositif utilisateur (101'A);
- un second dispositif utilisateur (101'B);
- le serveur de communication (102) comprenant:
- un serveur d'application de réunion (101a);
- un service de filtre (101);
dans lequel le serveur d'application de réunion (101a) est conçu pour acheminer au moins un canal de communication (103) entre le premier dispositif utilisateur (101'A) et le second dispositif utilisateur (101'B);
dans lequel le service de filtre (101) est conçu pour établir un canal de contrôle de filtre (104) entre le premier dispositif utilisateur (101'A) et le service de filtre (101) et/ou entre le deuxième dispositif utilisateur (101'B) et le service de filtre (101); et
dans lequel le service de filtre (101) est conçu pour appliquer une règle de contrôle du filtre (103e) fournie à l'intérieur du canal de contrôle du filtre (104) par le premier dispositif utilisateur (101'A) et/ou le second dispositif utilisateur (101'B);
dans lequel le service de filtre (101) est conçu pour analyser des informations courantes (103a, 103b, 103c, 103d) échangées dans le au moins un canal de communication (103) entre le premier dispositif utilisateur (101'A) et le second dispositif utilisateur (101'B);
dans lequel le service de filtre (101) est conçu pour extraire des informations contextuelles actuelles à partir des informations actuelles (103a, 103b, 103c, 103d) selon une règle de sélection contextuelle prédéfinie;
dans lequel le service de filtre (101) est conçu pour agréger les informations contextuelles actuelles extraites des informations actuelles;
dans lequel le service de filtre (101) est conçu pour filtrer des informations contextuelles actuelles agrégées selon la règle de contrôle du filtre et générer des informations filtrées sur la base de la règle de contrôle du filtre (103e) ; et
dans lequel le service de filtre (101) est conçu pour fournir les informations filtrées à au moins l'un des canaux de contrôle de filtre (104) et/ou à au moins un canal de communication (103).
